# EUROPÄISCHE PATENTSCHRIFT

(11) **EP 2 487 059 B1**
(45) Veröffentlichungstag und Bekanntmachung des Hinweises auf die Patenterteilung: **06.08.2014**
(21) Anmeldenummer: 09719952.5
(22) Anmeldetag: 30.04.2009
(51) Int. Cl.: B60K 6/22, B60K 6/10, B60K 6/30, B60K 6/42, F16H 3/72

(54) **HYBRIDANTRIEB FÜR EIN TRANSPORTMITTEL**
HYBRID DRIVE FOR A TRANSPORTATION MEANS
ENTRAÎNEMENT HYBRIDE POUR VÉHICULE DE TRANSPORT

(30) Priorität: 11.03.2008 RU 2008109427
(43) Veröffentlichungstag der Anmeldung: 15.08.2012
(73) Patentinhaber: OOO "Altera", Tomsk 634055 (RU)
(72) Erfinder: Tsyganov, Oleg A., 634041 Tomsk (RU)
(74) Vertreter: Jeck, Anton
(86) Internationale Anmeldenummer: PCT/RU2009/000213
(87) Internationale Veröffentlichungsnummer: WO 2009/113915

(56) Entgegenhaltungen:
- EP-A1- 0 543 390
- EP-A2- 1 275 547
- DE-A1- 19 838 853
- DE-A1- 19 841 828
- DE-A1- 19 962 854
- FR-A1- 2 834 938
- RU-C1- 2 184 660
- RU-C2- 2 297 924
- US-A- 5 865 263

## Beschreibung

Die Erfindung betrifft einen Hybridantrieb eines Fahrzeuges nach dem Oberbegriff des Anspruches. Die Erfindung betrifft Fahrzeuge und kann für die Antriebsräder in Fahrzeugen eingesetzt werden.

Bekannt ist ein Hybridantrieb (DE 3338548) mit einem Verbrennungsmotor und einer in einem Gehäuse untergebrachten Elektromaschine mit der Drehmöglichkeit für den Rotor und den Stator. Die Ausgangswelle des Verbrennungsmotors ist mit einem Drehelement der Elektromaschine mechanisch verbunden. Ein zweites Drehelement ist über ein mechanisches Getriebe mit der Antriebsachse des Fahrzeuges gekoppelt. In dieser Bauart wandelt die Elektromaschine einen Teil der mechanischen Energie des Verbrennungsmotors in elektrische Energie um und überträgt einen Teil der mechanischen Energie des Verbrennungsmotors auf das mechanische Getriebe. Der Nachteil dieses Antriebs ist eine hohe Baugröße der elektrischen Maschine aufgrund der Übertragung des vollständigen Drehmoments des Verbrennungsmotors auf das mechanische Getriebe.

Aus der RU 2264307 ist ein Triebwerk für ein Fahrzeug bekannt. Der Antrieb umfasst einen Energiespeicher. Dieser Speicher ist über ein Lenksystem mit mehreren reversiblen Elektromaschinen verbunden. Wenigstens eine Elektromaschine ist mit der Drehmöglichkeit für den Rotor und Stator im Gehäuse des Triebwerks versehen. Der Rotor dieser Elektromaschine hat die Möglichkeit, mit einem Speicher für die mechanische Energie kinematisch verbunden zu werden. Der Stator hat die Möglichkeit, mit einem oder mehreren Antriebsrädern verbunden zu werden. Das Bremssystem ist auf die Antriebsräder verteilt. Der Nachteil dieses Antriebs ist wie bei dem obigen trieb, dass die Elektromaschine mit zwei rotierenden Elementen das vollständige Drehmoment des Verbrennungsmotors auf die Antriebsräder überträgt.

Bekannt ist ein gattungsgemäßer Hybridantrieb eines Fahrzeugs (US 5865263), der als Prototyp gewählt ist. Er umfasst einen Verbrennungsmotor als Quelle für die mechanische Energie, zwei Elektromaschinen, einen Akkubatterie als Elektroenergiespeicher, einen Planetenmechanismus und ein zentrales Lenksystem. Eine der elektrischen Maschinen ist reversibel ausgebildet. Die Ausgangswelle des Verbrennungsmotors ist mit dem Steg des Planetenmechanismus verbunden. Das Sonnenrad des Planetenmechanismus ist mit der Welle der reversiblen Elektromaschine verbunden. Ein Hohlrad ist über eine Reihe von Zahnrädern mit der Welle der zweiten Elektromaschine und mit dem Differential der Antriebsräder verbunden.

Der Nachteil dieses Antriebs ist ein geringes, maximal mögliches Drehmoment, das auf die Antriebsräder des Fahrzeugs übertragen wird. Dieses Drehmoment ist lediglich durch das Drehmoment des Verbrennungsmotors, durch das Übertragungsverhältnis des Planetenmechanismus und durch das Drehmoment der mit dem Hohlrad verbundenen Elektromaschine bestimmt. Der zweite wesentliche Nachteil ist ein durch die Energieverluste in der Elektromaschine bedingter, niedriger Wirkungsgrad, da eine Übertragung des Drehmoments des Verbrennungsmotors auf die Antriebsräder des Fahrzeugs beim Abschalten dieser elektrischen Maschine unmöglich ist. Die Elektromaschine ist dazu nur mit einem der Zentralräder des Planetenmechanismus verbunden. Vom Nachteil ist auch ein geringes Drehmoment des Antriebs, wenn der Verbrennungsmotor ausgeschaltet ist. Das Fahrzeug wird dabei mittels der elektrischen Maschine, die mit dem Hohlrad des Planetenmechanismus verbunden ist, in Bewegung gesetzt. Die mit dem Sonnenrad verbundene Elektromaschine ist dabei ausgeschaltet, und ihre Welle dreht sich frei.

Es ist Aufgabe der Erfindung, das Moment, das auf die Antriebsräder des Fahrzeuges übertragen wird, sowie den Antriebswirkungsgrad zu erhöhen.

Die gestellte Aufgabe wird durch die Merkmale des Anspruches 1 gelöst.

Dies wird dadurch erreicht, dass der Antrieb, wie auch der Prototyp, einen Speicher für mechanische Energie über ein Lenksystem mit dem Elektroenergiespeicher elektrisch verbundene, reversible Elektromaschinen und ein Planetendifferentialgetriebe umfasst. Ein Steg des Planetendifferentialgetriebes ist mit einer Welle des Verbrennungsmotors verbunden. Eines der Getriebezentralräder ist mit einer reversiblen Elektromaschine mechanisch verbunden. Das zweite Zentralrad ist mit dem Differential der Antriebsräder verbunden. Im Unterschied zum Prototyp ist die mit dem Zentralrad des Planetenmechanismus verbundene Elektromaschine mit zwei drehbaren Elementen, die mit den Zentralrädern des genannten Planetendifferentialgetriebes verbunden sind, ausgeführt. Solche Elektromaschinen nennt man zweidimensional bzw. mit doppelter Drehung. Der Antrieb ist zusätzlich mit einer lenkbaren Kupplung für die mechanische Verbindung der drehbaren Teile der genannten Maschine miteinander sowie mit einer lenkbaren Kupplung zur Verbindung des Planetengetriebesteges mit einem unbeweglichen Teil des Antriebs oder des Fahrzeuges versehen.

Die Erfindung wird anhand eines in den Zeichnungen dargestellten Ausführungsbeispiels näher erläutert. Es zeigen:

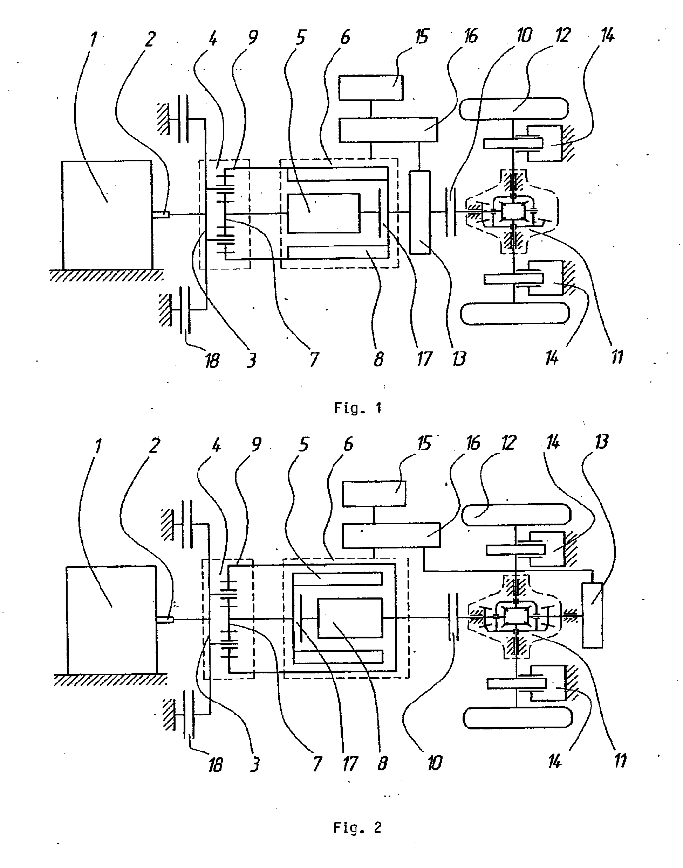

- Fig. 1: eine schematische Darstellung eines der möglichen Ausführungsbeispiele des erfindungsgemäßen Antriebs, in dem ein innere, drehbare Teil einer zweidimensionalen Elektromaschine mit dem Sonnenrad und ihr äußerer, drehbarer Teil über eine durchgehende Welle der zweiten Elektromaschine mit dem Differential der Antriebsräder des Fahrzeugs verbunden sind, und
- Fig. 2: eine schematische Darstellung, in der der äußere, drehbare Teil der zweidimensionalen Elektromaschine mit dem Sonnenrad und ihr innerer, drehbarer Teil mit dem mit der zweiten Elektromaschine verbundenen Differential der Antriebsräder verbunden sind.

Ein Verbrennungsmotor 1 ist im Gehäuse des Fahrzeuges (in den Figuren nicht gezeigt) befestigt. Seine Welle 2 ist mit einem Steg 3 eines Planetenmechanismus 4 verbunden. Ein drehbarer Teil 5 einer zweidimensionalen Elektromaschine 6 ist mit einem Sonnenrad 7 des Planetenmechanismus 4 verbunden, und ihr drehbarer Teil 8 ist mit einem Hohlrad 9 des Planetenmechanismus 4 und über eine Kupplung 10 mit einem Differential 11 von Antriebsrädern 12 gekoppelt. Der drehbare Teil 8 kann dabei mit der Kupplung 10 sowohl über eine durchgehende Welle der zweiten Elektromaschine 13 als auch direkt, wie in Fig. 2 gezeigt, verbunden werden. In diesem Fall ist die Elektromaschine 13 mit dem Differential 11 direkt gekoppelt.

Die Antriebsräder 12 können mit Hilfe eines normalen Bremssystems 14 des Fahrzeugs gebremst werden. Die reversiblen Elektromaschinen 6 und 13 erhalten die Elektroenergie von dem Energiespeicher 15 (einer Akkubatterie oder von einem anderen Energiespeicher, z. B. von einem Kondensator) und geben sie mit Hilfe eines Lenksystems 16 zurück. Die drehbaren Teile 5 und 8 der Elektromaschine 6 können über eine lenkbare Kupplung 17 miteinander verbunden werden. Der Steg 3 des Planetendifferentialgetriebes 4 kann mit dem Gehäuse des Fahrzeugs mittels einer lenkbaren Kupplung 18 verbunden sein. Der Typ und die Bauart der zweidimensionalen Elektromaschine 6 können beliebig sein (Wechsel- oder Gleichstrom, asynchron, synchron, mit einem Kollektor bzw. einem Feldsystem). Die Stromzufuhr und Stromabfuhr können an die Ankerwicklung sowohl mit Bürsten und Kontaktringen (oder mit Kollektoren) als auch kontaktlos verwirklicht werden. Im letzten Fall trägt die Elektromaschine die am Gehäuse befestigten, unbeweglichen Ankerwicklungen. Die drehbaren Teile 5 und 8 dieser Elektromaschine 6 können zylinder- oder scheibenförmig sein. Als Planetenmechanismus 4 kann ein Planetengetriebe mit zylindrischen Rädern, wie in den genannten Figuren, oder mit kegelförmigen Zahnrädern dienen. Anstelle des Verbrennungsmotors 1 kann ein beliebiger Speicher mechanischer Energie, z. B. eine Turbine oder ein Schwungrad, eingesetzt werden. Anstelle des Akkubatterie (oder zusammen) kann als Energiespeicher 15 ein Kondensator eingesetzt werden.

Der Antrieb funktioniert folgenderweise. Zum Anlassen des Verbrennungsmotors 1 wird die Elektroenergie vom Energiespeicher 15 der Elektromaschine 6 zugeführt, indem die Elektromaschine mit Hilfe des Lenksystems 16 in den Elektromotorbetrieb überführt wird. Die über das Differential 11 und die Kupplung 10 mit dem drehbaren Teil 8 und dem Hohlrad 9 des Planetenmechanismus 4 verbundenen Antriebsräder 12 werden dabei mit Hilfe des Bremssystems 14 des Fahrzeuges vom Rotieren ferngehalten. Der rotierende Teil 5 der Elektromaschine 6 dreht die Welle 2 über das Sonnenrad 7 und den Steg 3 und lässt somit den Verbrennungsmotor 1 an. Danach wird das Bremssystem 14 ausgeschaltet und der Verbrennungsmotor 1 dreht das Hohlrad 9 über den Steg 3 und den Teil 5 der Elektromaschine 6 über das Sonnenrad 7. Die Elektromaschine 6 ist dabei über das Lenksystem 16 auf Generatorbetrieb umgeschaltet. Der Teil 5 rotiert in der gleichen Richtung wie der Teil 8 aber mit einer höheren Winkelfrequenz. Der durch diese Elektromaschine 6 erzeugte Strom ist der Elektromaschine 13 zugeführt, und der Überschuss wird in dem Energiespeicher 15 gespeichert bzw. der Energiemangel wird dem Energiespeicher 15 entnommen. Dabei wird das über das Differential 11 von der Elektromaschine 13 und von dem Verbrennungsmotor 1 (über das Hohlrad 9 und den Steg 3) übertragene Drehmoment der Antriebsräder 12 zu dem Drehmoment der Teile 5 und 8 der elektrischen Maschine 6 addiert. Nach der Fahrzeugbeschleunigung werden die rotierenden Teile 5 und 8 der Elektromaschine 6 mit Hilfe der lenkbaren Kupplung 17 mechanisch gekoppelt. Danach wird Elektroenergie der elektrischen Maschine nicht zugeführt. Die ganze mechanische Energie des Verbrennungsmotors 1 wird dabei auf die Antriebsräder 12 vollständig (mit Ausnahme von unvermeidlichen Verlusten in den Lagern) übertragen. Die Fahrtgeschwindigkeit des Fahrzeugs wird durch die Drehfrequenz der Welle 2 des Verbrennungsmotors 1 bestimmt. Um die Fahrgeschwindigkeit des Fahrzeugs wesentlich zu erhöhen, wird die lenkbare Kupplung 17 ausgekuppelt und die elektrische Maschine 6 wird mit Hilfe des Lenksystems 16 in den Elektromotorbetrieb überführt. Der Teil 5 der Elektromaschine 6 dreht sich in der Gegenrichtung des Teiles 8. Zur Beschleunigung und Fahrt des Fahrzeugs, ohne den Verbrennungsmotor 1 anzulassen (z. B. bei Fahrten in umweltfreundlichen grünen Zonen) wird die elektrische Maschine 13 in den Elektromotorbetrieb überführt und dreht die Antriebsräder 12 des Fahrzeuges. Um das Drehmoment an den Antriebsrädern 12 zu erhöhen, wird der Steg 3 über die Kupplung 18 mit dem Gehäuse des Fahrzeugs verbunden. Die elektrische Maschine 6 wird dann in den Elektromotorbetrieb überführt, und ihre Teile 5 und 8 drehen sich gegeneinander. Dabei wird das Drehmoment dieser elektrischen Maschine 6 über den Differentialmechanismus 4, die Kupplung 10 und das Differential 11 an die Antriebsräder 12 des Fahrzeugs übertragen und zum Drehmoment der elektrischen Maschine 13 addiert. Beim Bergabfahren kuppelt man das Hohlrad 9 mit Hilfe der Kupplung 10 von den Antriebsrädern 12 aus. Die elektrische Maschine 6 und der Verbrennungsmotor 1 werden abgestellt. Dies schließt Energieverluste aus und verlängert den vom Fahrzeug gefahrenen Weg. Beim Fahrzeugbremsen werden die elektrischen Maschinen 6 und 13 in den Generatorbetrieb überführt und wandeln die mechanische Energie des Fahrzeuges in elektrische Energie um, die in dem Energiespeicher 15, z. B. der Akkubatterie, gespeichert wird.

## Patentansprüche

1. Hybridantrieb eines Fahrzeuges, der einen Speicher für mechanische Energie umfasst, dessen Welle (2) mit dem Steg (3) eines Planetenmechanismus (4) verbunden ist, sowie mit einem über ein Lenksystem (16) mit reversiblen Elektromaschinen (6, 13) elektrisch verbundenem Energiespeicher (15), wobei wenigstens eine der Elektromaschinen (6) mit einem Zentralrad (7) des Planetenmechanismus (4) mechanisch verbunden ist und ein zweites Zentralrad (9) des Planetenmechanismus (4) mit einem Differential (11) der Antriebsräder (12) des Fahrzeuges mechanisch verbunden ist,
**dadurch gekennzeichnet,**
**dass** die genannte Elektromaschine (6) mit zwei drehbaren Teilen (5, 8) ausgebildet ist, die mit den Zentralrädern (7, 9) des Planetenmechanismus (4) mechanisch verbunden sind und
**dass** zusätzlich zwei lenkbare Kupplungen (17, 18) zur Verbindung der genannten drehbaren Teile (5, 8) der reversiblen Elektromaschine (6) miteinander sowie zur Verbindung des Steges (3) des Planetenmechanismus (4) mit einem unbeweglichen Antriebselement oder dem Gehäuse vorgesehen sind.

## Claims

1. A hybrid drive for a vehicle, in which the drive includes a storage means for mechanical energy the shaft (2) of which is connected to the fixed link (3) of a planetary mechanism (4), and the drive has an energy storage means (15) connected electrically via a steering system (16) to reversible electric machines (6, 13), at least one of the electric machines (6) being mechanically connected to a planet wheel (7) of the planetary mechanism (4), and a second planet wheel (9) of the planetary mechanism (4) being mechanically connected to a differential (11) of the driving wheels (12) of the vehicle,
**characterized in that**
said electric machine (6) is embodied with two rotatable parts (5, 8), which are mechanically connected to the planet wheels (7, 9) of the planetary mechanism; and
that in addition, two steerable clutches (17, 18) for connecting said rotatable parts (5, 8) of the reversible electric machine (6) to one another and for connecting the fixed link (3) of the planetary mechanism (4) to an immobile drive element or to the housing are provided.

## Revendications

1. Entraînement hybride d'un véhicule, qui comprend un accumulateur d'énergie mécanique dont l'arbre (2) est relié au porte-satellites (3) d'un mécanisme planétaire (4), et avec un accumulateur d'énergie électrique (15) électriquement relié à des machines électriques réversibles (6, 13) par l'intermédiaire d'un système de commande (16), sachant qu'au moins une (6) des machines électriques est mécaniquement reliée à une roue solaire (7) du mécanisme planétaire (4) et qu'une couronne (9) du mécanisme planétaire (4) est mécaniquement reliée à un différentiel (11) des roues motrices (12) du véhicule,
**caractérisé en ce que** ladite machine électrique (6) est réalisée avec deux parties rotatives (5, 8) qui sont mécaniquement reliées aux roues (7, 9) du mécanisme planétaire (4),
et **en ce qu'**il est en outre prévu deux accouplements pouvant être commandés (17, 18) pour relier entre elles lesdites parties rotatives (5, 8) de la machine électrique réversible (6) ainsi que pour relier le porte-satellites (3) du mécanisme planétaire (4) à un élément fixe de l'entraînement ou au carter.
